# EUROPÄISCHE PATENTSCHRIFT

(11) **EP 4 228 153 B1**
(45) Veröffentlichungstag und Bekanntmachung des Hinweises auf die Patenterteilung: **23.04.2025**
(21) Anmeldenummer: 23155197.9
(22) Anmeldetag: 06.02.2023
(51) Int. Cl.: H02S 40/34

(54) **PHOTOVOLTAIKMODUL UND ANSCHLUSSDOSE FÜR EIN PHOTOVOLTAIKMODUL**
PHOTOVOLTAIC MODULE AND CONNECTION BOX FOR A PHOTOVOLTAIC MODULE
MODULE PHOTOVOLTAÏQUE ET BOÎTE DE RACCORDEMENT POUR UN MODULE PHOTOVOLTAÏQUE

(30) Priorität: 15.02.2022 DE 102022103543
(43) Veröffentlichungstag der Anmeldung: 16.08.2023
(73) Patentinhaber: Weidmüller Interface GmbH & Co. KG, 32758 Detmold (DE)
(72) Erfinder: BÖNSCH, Matthias, 33659 Bielefeld (DE); WÜNSCHE, Torsten, 33818 Leopoldshöhe (DE); JUNG, Torsten, 32805 Horn-Bad Meinberg (DE); SMITH, Christopher, 33803 Steinhagen (DE); DIEKMANN, Torsten, 33818 Leopoldshöhe (DE)
(74) Vertreter: Kleine, Hubertus

(56) Entgegenhaltungen:
- DE-A1- 102013 211 167
- US-A1- 2010 075 531
- US-A1- 2011 183 531

## Beschreibung

Die Erfindung betrifft ein Photovoltaikmodul mit mindestens zwei Zellanordnungen, die extern an Anschlusskontakten kontaktierbar sind, die in den Zellanordnungen zugeordneten Gruppen von jeweils zwei Anschlusskontakten entlang einer Linie an der Rückseite des Photovoltaikmoduls angeordnet sind, wobei genau eine Anschlussdose auf einer Rückseite des Photovoltaikmodul angeordnet ist, die ein Gehäuse aufweist, das zu der Rückseite hin mindestens eine Öffnung zur Durchführung der Anschlusskontakt aufweist, und wobei das Gehäuse alle Anschlusskontakte des Photovoltaikmoduls überdeckt. Die Erfindung betrifft weiterhin eine Anschlussdose für ein derartiges Photovoltaikmodul, wobei die Anschlussdose ein Gehäuse aufweist, das mindestens eine Öffnung zur Durchführung der Anschlusskontakt aufweist, und wobei im Gehäuse mindestens vier Kontakte zur Kontaktierung der Anschlusskontakte angeordnet sind, wobei das Gehäuse eine langgestreckte Grundform aufweist, wobei alle Anschlusskontakte in einer Linie entlang einer Längsrichtung des Gehäuses angeordnet sind, und wobei die Kontakte im Gehäuse in Kontaktbereichen angeordnet sind.

Photovoltaikmodule, nachfolgend auch als PV-Module abgekürzt, z.B. zur Montage auf einem Hausdach oder in Freilandanlagen, weisen in der Regel eine Mehrzahl von Photovoltaikzellen (PV-Zellen) auf, die seriell und/oder parallel verschaltet mindestens eine Zellanordnung bilden, die von extern über Anschlusskabel kontaktierbar sind. Häufig weisen PV-Module mehrere solcher Zellanordnungen auf, die innerhalb des PV-Moduls serienverschaltet sind. **In** dem Fall ist üblicherweise jede der Zellanordnungen mit ihren Endanschlüssen aus dem Modul herausgeführt, um parallel zu jeder Zellanordnung jeweils eine sogenannte "Bypass-Diode" zu schalten. Die Bypass-Dioden leiten Strom an verschatteten oder defekten Zellanordnungen vorbei. Ohne die Bypass-Dioden würde eine Verschattung oder ein Defekt einer der Zellanordnungen des Moduls den Stromfluss durch das gesamte Modul verringern, auch wenn die anderen Zellanordnungen des Moduls oder auch andere, mit dem Modul in Reihe geschaltete weitere Module, nicht verschattet oder defekt sind.

Aus dem Stand der Technik, z.B. aus den Druckschriften US 2010/0075531 A1 oder US 2011/0183531 A1, sind PV-Module bekannt, bei denen Anschlusskontakte der vorhandenen Zellanordnungen (üblicherweise von drei Zellanordnungen) benachbart zueinander an einer Rückseite des PV-Moduls in einem gemeinsamen Anschlussbereich kontaktierbar sind.

Ein PV-Modul mit einer derartigen Anschlussanordnung ist beispielsweise auch in der Druckschrift US 2016/0141435 A1 in einem Ausführungsbeispiel beschrieben. In einem weiteren Ausführungsbeispiel beschreibt die Druckschrift ein PV-Modul, bei dem Kontaktflächen verschiedener Zellanordnungen nicht in einem gemeinsamen Anschlussbereich an der Rückseite des PV-Moduls positioniert sind, sondern an mehreren unterschiedlichen Positionen. Eine solche Auslegung eines PV-Moduls bietet sich insbesondere an, wenn das PV-Modul an jeweils zwei Anschlusskontakten zwei parallel geschaltete Reihenanordnungen (sogenannte Strings) von PV-Zellen aufweist. Zwei jeweils parallel geschaltete Strings lassen sich geometrisch gut in ein rechteckiges PV-Modul integrieren, indem die gemeinsamen Anschlusskontakte entlang einer Mittellinie positioniert sind, die mittig im Hinblick auf eine Längserstreckungsrichtung des PV-Moduls und damit parallel zu den kürzeren Querseiten des PV-Moduls verläuft. Wenn das PV-Modul beispielsweise drei unabhängig voneinander kontaktierbare Zellanordnungen aufweist, sind entlang dieser Mittellinie dreimal zwei zueinander benachbarte Kontakte angeordnet. Ein Kontaktsatz mit zwei Anschlusskontakten ist dabei in etwa mittig entlang der Mittellinie positioniert und die anderen beiden Kontaktsätze jeweils auf der einen bzw. anderen Seite näher zur Längsseite des PV-Moduls. In dem Fall ist gemäß der genannten Druckschrift jeder der Anschlussbereiche mit einer Dose abgedeckt, die eine Bypass-Diode aufnimmt. Zumindest zwei der Dosen fungieren wie zuvor beschrieben als Anschlussdosen, indem jeweils ein Anschlusskabel zum externen Anschluss des PV-Moduls zu jeder dieser Dosen führt und innerhalb der Dose mit einer der Zellanordnungen verbunden ist.

Gegenüber einem PV-Modul, bei dem alle Anschlusskontakte benachbart zu einander positioniert sind und eine gemeinsame Anschlussdose verwendet wird, führt der Einsatz von mehreren separaten Dosen für jede Zellanordnung zu einem erhöhten Aufwand beim Anmontieren und gegebenenfalls Abdichten der Dosen bzw. Anschlussdosen.

Die Druckschrift DE 10 2013 211 167 A1 zeigt ein PV-Modul, dessen Rahmen zur Erhöhung der Stabilität eine Mittelstrebe in Form einer Stabilisierungsschiene aufweist. Die Stabilisierungsschiene weist einen Hohlraum auf, z.B. indem sie eine Doppel-T-Form hat und seitlich offen ist. In den Hohlraum ist eine längliche Anschlussdose eingesetzt und befestigt. Als Vorteil ergibt sich, dass auch schwerere Anschlussdosen mit über 500 Gramm Gewicht eingesetzt werden können. Weiter kann vorteilhaft die Stabilisierungsschiene als Wärmesenke für z.B. in der Anschlussdose aufgenommene Bypasselemente dienen. Wie Anschlusskontakte der Zellanordnungen in die Anschlussdose geführt sind, ist nicht näher erläutert. Die Montage der Stabilisierungsschiene und die Anordnung der Anschlussdose in dem Hohlraum der Stabilisierungsschiene führt jedoch erkennbar zu zusätzlichem Montageaufwand und erschwert einen Zugang zu den Kontaktbereichen in der Anschlussdose.

Es ist eine Aufgabe der vorliegenden Erfindung, eine das PV-Modul stabilisierende Anschlussdose mit gut zugänglichen Kontaktbereichen für und ein Photovoltaikmodul mit einer solchen Anschlussdose zu beschreiben, bei denen ein geringer Montageaufwand auch bei Modulen gegeben ist, bei denen die Kontakte verschiedener Zellanordnungen nicht benachbart zueinander aus dem PV-Modul herausgeführt sind.

Diese Aufgabe wird gelöst durch eine Anschlussdose bzw. ein PV-Modul mit einer solchen Anschlussdose mit den Merkmalen des jeweiligen unabhängigen Anspruchs 1 für ein Photovoltaikmodul und Anspruchs 6 für eine Anschlussdose. Vorteilhafte Ausgestaltungen und Weiterbildungen sind Gegenstand der abhängigen Ansprüche.

Ein erfindungsgemäßes Photovoltaikmodul zeichnet sich dadurch aus, dass das Gehäuse der Anschlussdose eine Länge aufweist, die größer als 50 % und bevorzugt größer als 66 % und besonders bevorzugt größer als 80 % der Länge der Seitenkante ist.

Der Erfindung liegt die Erkenntnis zugrunde, dass es bei entsprechender Gestaltung des Gehäuses der Anschlussdose auch bei einem PV-Modul, bei dem die Anschlusskontakte der Zellanordnungen nicht in einem gemeinsamen Anschlussbereich an der Rückseite des PV-Moduls positioniert sind, möglich und vorteilhaft ist, die Anschlusskontakte durch eine einzige Anschlussdose abzudecken und innerhalb der Anschlussdose zu kontaktieren. Entsprechend braucht nur diese eine Anschlussdose auf die Rückseite des PV-Moduls aufmontiert werden, was die Kontaktierung und damit die Herstellung des PV-Moduls vereinfacht und beschleunigt.

Darüber hinaus stellt die Anschlussdose aufgrund ihrer Längserstreckung eine Verstärkung und Stabilisierung des PV-Moduls dar. Das PV-Modul kann durch die Stabilisierung durch die Anschlussdose beispielsweise eine höhere Schnee- oder Windlast tragen. Im Hinblick auf eine Energieeffizienz bei der Herstellung, beim Transport und beim Montieren der PV-Module sind größere PV-Module vorteilhaft. Der durch die vorliegende Erfindung erzielte verstärkende und stabilisierende Effekt wird möglicherweise in Zukunft umso wichtiger, je größer die Abmessungen von PV-Modulen werden. Die Stabilisierung durch die sich über alle Anschlusskontakte erstreckende Anschlussdose unterstützt so die Herstellbarkeit größerer PV-Module. Neben den positiven Eigenschaften der Stabilisierung und Verstärkung im Betrieb ist eine höhere Steifigkeit des PV-Moduls auch für Produktion, Transport und Handling bei der Montage vorteilhaft.

Mit den genannten Gehäusegrößen der Anschlussdose können die Anschlusskontakte von PV-Modulen mit zwei bzw. drei unabhängigen Zellanordnungen überdeckt werden. Die Anschlussdosen weisen damit eine Länge auf, die einen signifikanten Teil der Ausdehnung des PV-Moduls beträgt, wodurch ein hoher Verstärkungseffekt gegeben ist. Bevorzugt verläuft die Linie, entlang derer die Anschlusskontakte liegen, in etwa mittig auf der Rückseite des PV-Modul. In dieser Position ist eine Unterstützung des Schichtenstapels des PV-Moduls besonders effektiv.

In einer weiteren vorteilhaften Ausgestaltung weist das PV-Modul einen äußeren Rahmen aus Metallprofilen auf, wobei das Gehäuse der Anschlussdose mit mindestens einem, bevorzugt beiden Endabschnitt(en) bis an den Rahmen reicht. In diesem Fall wird die Anschlussdose zur weiteren Erhöhung des Verstärkungseffekts über die zur Abdeckung der Anschlusskontakte des PV-Moduls notwendigen Länge bis zum Rahmen und damit dem Rand des PV-Moduls verlängert.

In einer weiteren vorteilhaften Ausgestaltung des PV-Moduls weist das Gehäuse der Anschlussdose eine Unterseite auf, die als Klebefläche dient, mit der die Anschlussdose auf die Rückseite aufgeklebt ist. Die Längserstreckung des Gehäuses ermöglicht die Nutzung einer relativ großen Klebefläche, was zu einer großen Belastbarkeit der Verbindung zwischen Anschlussdose und Rückseite des PV-Moduls führt. Beispielsweise kann so verhindert werden, dass Zugkräfte an einem Anschlusskabel, das an der Anschlussdose angeschlossen ist, ungewollt die Anschlussdose von der Rückseite lösen.

Eine erfindungsgemäße Anschlussdose für ein Photovoltaikmodul der eingangs genannten Art zeichnet sich dadurch aus, dass das Gehäuse in den Kontaktbereichen jeweils auch nach oben eine Öffnung aufweisen, die mit einem Deckel verschließbar ist. Bei entsprechender Abdichtung kann durch den Deckel ein Gehäusehohlraum hermetisch so abgedichtet werden, dass beispielsweise ein Vergießen dieses Hohlraums nicht erforderlich ist. Vorteilhaft bleiben dann die Kontaktbereiche durch Öffnen des Deckels zugänglich und wären auch im Falle eines Recyclings einfacher zu trennen.

In einer weiteren vorteilhaften Ausgestaltung weist die Anschlussdose mindestens einen Kontaktträger auf, der mindestens zwei Kontakte zur Kontaktierung der Anschlusskontakte des PV-Moduls trägt. Der Kontaktträger kann vorteilhaft durch ein Stanzgitter gebildet sein. Dabei ist es auch denkbar, dass der mindestens ein Kontaktträger alle Kontakte zur Kontaktierung der Anschlusskontakte trägt, sich also über alle Kontaktbereiche durch das Gehäuse erstreckt. Als Kontakte können beispielsweise Kontakttulpen Verwendung finden. Weiter kann an dem mindestens einen Kontaktträger mindestens eine Bypass-Diode angeordnet sein, die parallel zu zwei Kontakten geschaltet ist. Durch den Zugang zum Kontaktträger durch den oder die Deckel können die Bypass-Dioden leicht mit dem Kontaktträger getauscht werden, falls ein Defekt an einer der Bypass-Dioden aufgetreten ist.

Die Erfindung wird nachfolgend anhand von Ausführungsbeispielen mithilfe von Figuren näher erläutert. Die Figuren zeigen:
- Figur 1a: eine isometrische Darstellung eines PV-Moduls mit Blick auf seine Rückseite;
- Figur 1b: eine Detailansicht des PV-Moduls der Figur 1a im Bereich einer Anschlussdose;
- Figur 2a: eine isometrische Darstellung eines PV-Moduls mit Blick auf seine Rückseite in einem zweiten Ausführungsbeispiel;
- Figur 2b: eine Detailansicht des PV-Moduls der Figur 2a im Bereich einer Anschlussdose;
- Figur 2c: die Anschlussdose gemäß den Figuren 2a, b separat in einer isometrischen Darstellung mit Blick auf ihre Unterseite;
- Figur 3a: eine isometrische Darstellung von Teilen einer Anschlussdose eines PV-Moduls vor einem Kontaktieren;
- Figur 3b: eine isometrische Darstellung eines Kontaktelements gemäß Figur 3a mit Blick auf seine Unterseite; und
- Figur 3c: die Anordnung gemäß Figur 3a im kontaktierten Zustand.

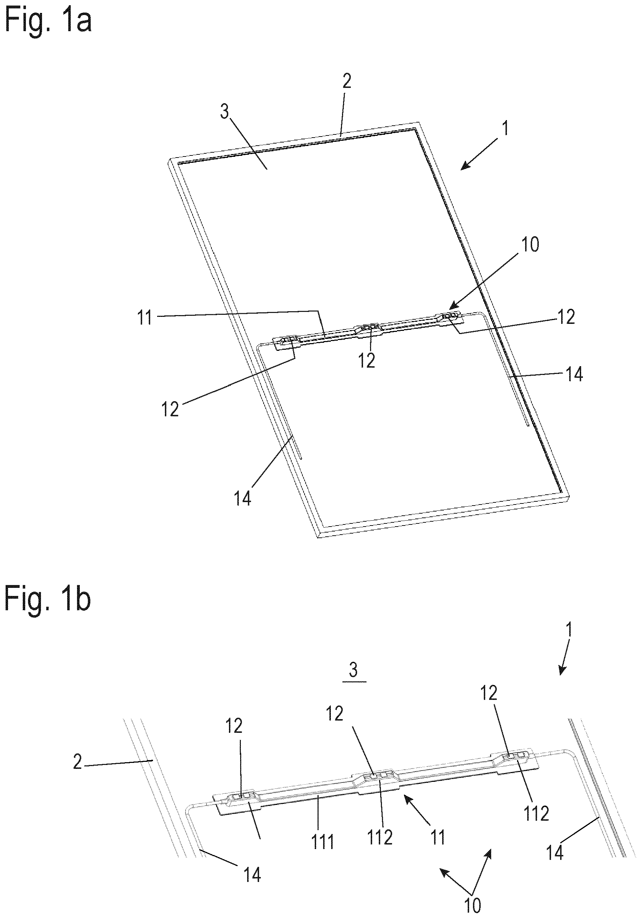

In Figur 1a ist ein PV-Modul 1 in einer isometrischen Darstellung wiedergegeben. Das PV-Modul 1 weist einen Rahmen 2 auf sowie die eigentliche Modulstruktur, die im Rahmen dieser Anmeldung auch als Schichtenaufbau oder Schichtenstapel bezeichnet wird. Von dieser Modulstruktur ist in der Darstellung der Figur 1a nur eine Rückseite 3 zu erkennen.

Bei dem PV-Modul 1 umfasst die Modulstruktur eine oder mehrere Zellanordnungen - hier konkret drei - die jeweils eine Mehrzahl von hier nicht einzeln erkennbaren PV-Zellen aufweisen, die jeweils in Form von zwei Strings angeordnet sind. Die Rückseite 3 des PV-Moduls 1 ist mit einer isolierenden Schicht abgedeckt, wobei diese isolierende Schicht an ausgewählten Stellen unterbrochen ist, um den Austritt von Anschlusskontakten der Zellanordnungen zu ermöglichen.

Aufgrund der Modulstruktur sind bei dem PV-Modul 1 der Figur 1a die Anschlusskontakte in Gruppen von jeweils zwei Kontakten pro Zellanordnung entlang einer Mittellinie des PV-Moduls 1 angeordnet. Die Mittellinie des PV-Moduls 1 verläuft parallel zu seinen (kürzeren) Querseiten und mittig im Hinblick auf die (längeren) Längsseiten des PV-Moduls 1, dessen Grundfläche rechteckig ist.

Entlang der genannten Mittellinie ist eine Anschlussanordnung 10 vorhanden, die in der Figur 1b in einer Vergrößerung wiedergegeben ist. Die Anschlussanordnung 10 umfasst eine Anschlussdose 11 und zwei Anschlusskabel 14.

Anmeldungsgemäß erstreckt sich die Anschlussdose 11 über annähernd die gesamte Ausdehnung des PV-Moduls 1 in seiner Querrichtung, so dass von einer einzelnen Anschlussdose 11 alle Anschlusskontakte des PV-Moduls 1 abgedeckt werden und entsprechend innerhalb dieser einen Anschlussdose 11 kontaktiert werden. Die Anschlussdose 11 weist entsprechend ein durchgehendes und lang gestrecktes Gehäuse 111 auf. Dieses Gehäuse 111 ist in drei Kontaktbereichen 112, in denen die hier nicht sichtbaren Anschlusskontakte des PV-Moduls 1 liegen, verbreitert und erhöht sowie nach oben von jeweils einem Deckel 12 abgedeckt.

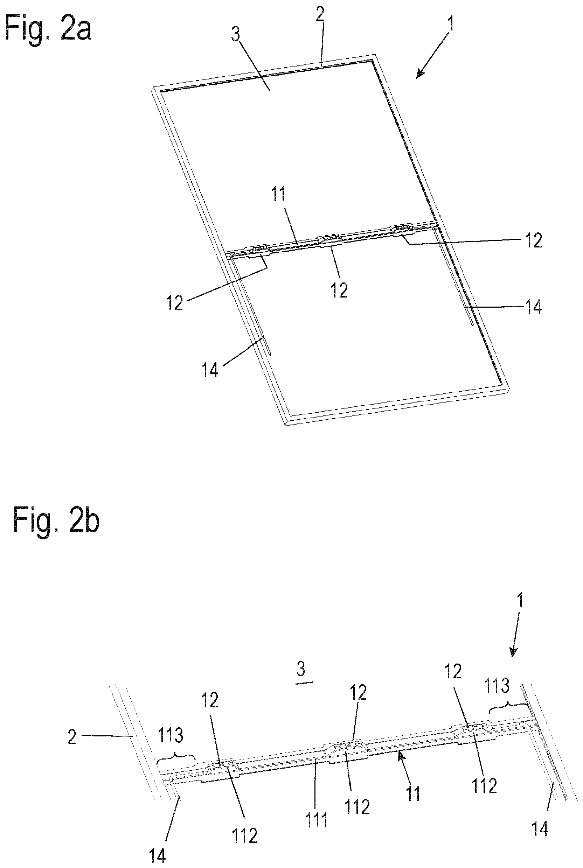

In den Figuren 2a und 2b ist ein weiteres Ausführungsbeispiel eines PV-Moduls 1 mit Anschlussanordnung 10 in gleicher Weise wie in den Figuren 1a und 1b dargestellt. Der Aufbau des PV-Moduls 1 und der Anschlussanordnung 10 entspricht im Wesentlichen dem des ersten Ausführungsbeispiels. Im Unterschied ist, wie insbesondere aus Figur 2b ersichtlich, die Anschlussdose 11 über die beiden äußeren Kontaktbereiche 112 durch verlängerte Endabschnitte 113 bis an den Rahmen 2 des PV-Moduls 1 herangeführt.

Bei beiden Ausführungsbeispielen ermöglicht es die lang gestreckte Anschlussdose 11 mit dem entsprechend geformten Gehäuse 111 eine Kontaktierung aller Anschlusskontakte des PV-Moduls 1 durch eine einzelne Anschlussdose 11. Entsprechend muss auch nur diese eine Anschlussdose 11 auf die Rückseite 3 des PV-Moduls 1 aufmontiert werden. Das beschleunigt die Kontaktierung und damit die Herstellung des PV-Moduls 1.

Darüber hinaus stellt die Anschlussdose 11 aufgrund ihrer Erstreckung über annähernd (Figur 1a, 1b) bzw. die gesamte Breite (Figur 2a, 2b) des PV-Moduls 1 eine Verstärkung und Stabilisierung des PV-Moduls 1 dar. Das PV-Modul 1 kann durch die Stabilisierung durch die Anschlussdose 11 beispielsweise eine höhere Schnee- oder Windlast tragen. Neben den positiven Eigenschaften der Stabilisierung und Verstärkung im Betrieb ist eine höhere Steifigkeit des PV-Moduls 1 auch für Produktion, Transport und Handling bei der Montage vorteilhaft.

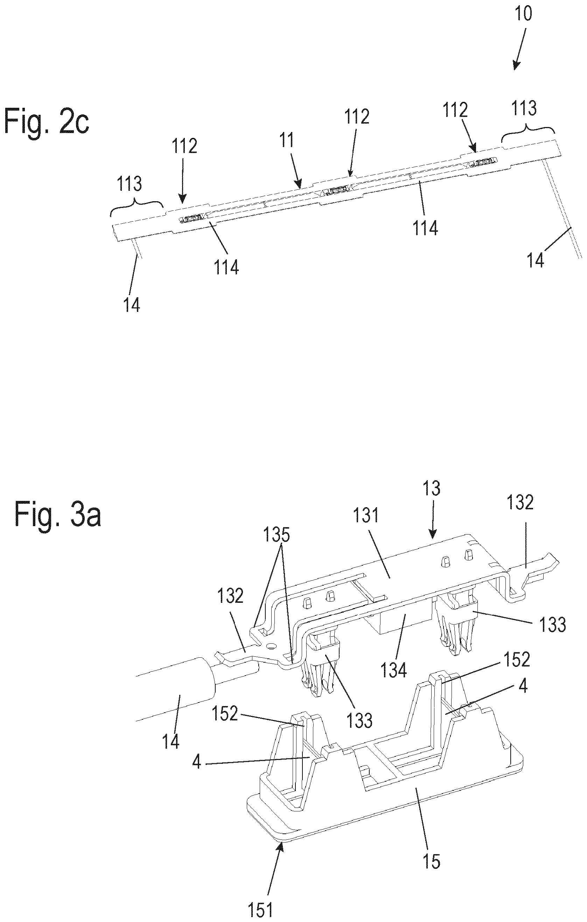

In Figur 2c ist die Anschlussanordnung 10, d.h. die Anordnung aus Anschlussdose 11 und Anschlusskabeln 14, separat vom PV-Modul 1 mit Blick auf ihre Unterseite dargestellt. In dieser Darstellung zeigt sich, dass das Gehäuse 111 an seiner Unterseite 114 eine große Klebefläche bereitstellt, mit der die Anschlussdose 11 auf die Rückseite 3 des PV-Moduls 1 aufgeklebt und damit auch abgedichtet wird. Die große Klebefläche führt auch zu einer großen Belastbarkeit der Verbindung zwischen Anschlussdose 11 und Rückseite 3 des PV-Moduls 1, was beispielsweise verhindert, dass Zugkräfte am Anschlusskabel 14 die Anschlussdose 11 ungewollt von der Rückseite 3 des PV-Moduls 1 lösen.

Weiter ist in Figur 2c erkennbar, dass das Gehäuse 111 einen durchgehenden Hohlraum bereitstellt, der sich über die drei Kontaktbereiche 112 erstreckt. Falls eine Kontaktierung der Zellanordnung untereinander nicht innerhalb des PV-Moduls 1 vorgenommen ist, kann der Hohlraum, der zwischen zwei Kontaktbereichen 112 im Gehäuse 111 vorhanden ist, genutzt werden, um eine elektrische Verbindung zwischen den Anschlusskontakten der verschiedenen Zellanordnungen innerhalb der Anschlussdose 11 umzusetzen.

Die Figuren 3a-c zeigen jeweils den Bereich zweier Anschlusskontakte 4 auf der Rückseite 3 eines PV-Moduls 1.

In der Figur 3a sind die beiden Anschlusskontakte 4 einer Zellanordnung zu erkennen, die in Form von Anschlusslaschen von der Rückseite 3 des PV-Moduls 1 hochstehen. Über die Anschlusskontakte 4 wird ein Kontaktträger 15 gesteckt, der mit seiner Unterseite 151 auf die Rückseite 3 des PV-Moduls 1 aufgeklebt wird. Der Kontaktträger 15 weist im Bereich der Anschlusskontakte 4 Kontaktführungsnuten 152 auf, die die Anschlusskontakte 4 führen und ein Abbiegen der Anschlusskontakte 4 zur Seite hin verhindern.

In dem dargestellten Ausführungsbeispiel ist ein Kontaktträger 15 für jeweils zwei Anschlusskontakte 4 vorgesehen. Bei den in den Figuren 1a bis 2c gezeigten PV-Modulen 1 würden entsprechend der Anzahl von drei Zellanordnungen drei Kontaktträger 15 eingesetzt. In alternativen Ausführungen kann auch ein einzelner länglicher Kontaktträger eingesetzt werden, der sich über die Anschlussbereiche aller Zellanordnungen erstreckt und alle Anschlusskontakte 4 des PV-Moduls 1 aufnimmt, z.B. durch eine entsprechende Anzahl von Kontaktführungsnuten 152.

Auf die oder den Kontaktträger 15 wird dann das Gehäuse 111 der Anschlussdose 11 aufgesetzt, wobei das Gehäuse 111 die Kontaktträger 15 vollständig umgibt. Die Unterseite 114 des Gehäuses 111 liegt, wie im Zusammenhang mit der Figur 2c beschrieben ist, auf der Rückseite 3 des PV-Moduls 1 auf und ist mit diesem verklebt.

Zur Kontaktierung von jeweils zwei Anschlusskontakten 4 einer Zellanordnung ist jeweils ein Kontaktelement 13 vorgesehen, das bereits in das Gehäuse 111 eingesetzt ist. In der Figur 3a ist ein solches Kontaktelement 13 vor dem Aufsetzen auf die Anschlusskontakte 4 bzw. den Kontaktträger 15 wiedergegeben. Dabei ist das Gehäuse 111 der Anschlussdose 11 nicht gezeigt, damit der Kontaktträger 15 und das Kontaktelement 13 sichtbar sind.

Das Kontaktelement 13 ist beispielsweise auf Basis eines Stanzgitters 131 ausgebildet. Am Stanzgitter 131 sind seitlich Anschlüsse 132 ausgeformt, wobei an einem der Anschlüsse 132 eines der Anschlusskabel 14 befestigt ist, beispielsweise in einem Punktschweißvorgang. An dem gegenüberliegenden Anschluss 132 kann ein Verbindungskabel angeschlossen sein, das zum nächsten Kontaktbereich 112 führt. Falls eine interne Kontaktierung im PV-Modul 1 zwischen den Zellanordnungen vorgesehen ist, kann der zweite Anschluss 132 auch offenbleiben.

Weiter sind am Kontaktelement 13 zwei Kontakte zur Kontaktierung der Anschlusskontakte 4 vorhanden, die vorliegend als Kontakttulpen 133 ausgeführt sind. Zudem ist eine Bypass-Diode 134 montiert, die elektrisch zwischen den beiden Kontakttulpen 133 verschaltet ist, so dass sie parallel zu den Anschlusskontakten 4 und damit parallel zur Zellanordnung geschaltet ist.

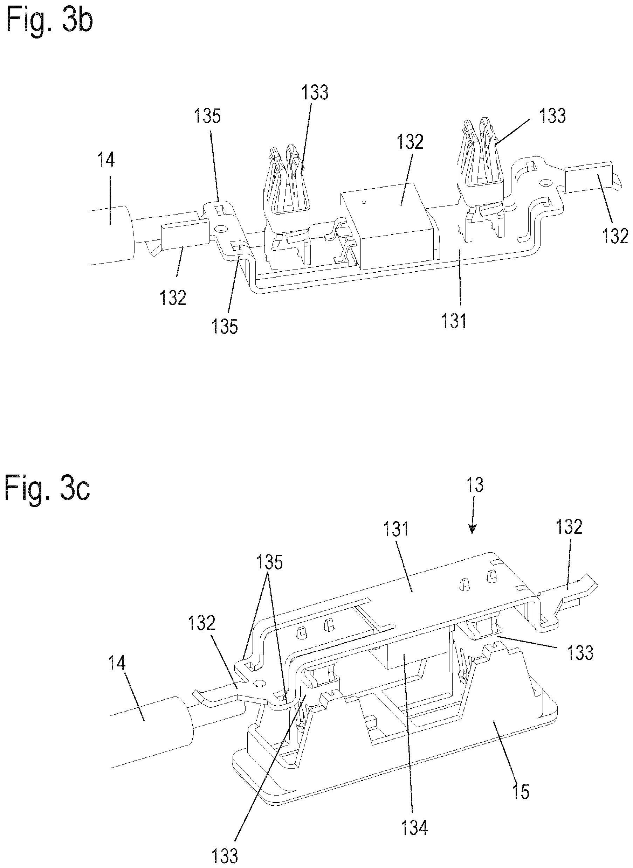

In Figur 3b ist das Kontaktelement 13 mit Blick auf seiner Unterseite nochmals separat wiedergegeben. Um die Kontakttulpen 133 und die Bypass-Diode 134 auf dem Stanzgitter 131 montieren, insbesondere verschweißen bzw. verlöten zu können, liegt das Stanzgitter 131 zunächst noch einteilig vor. Die seitlich Anschlüsse 132 sind daher zunächst noch elektrisch miteinander verbunden. Nach der Montage der Kontakttulpen 133 und der Bypass-Diode 134 wird diese Verbindung an Trennstellen 135 aufgetrennt.

Eine Befestigung der montierten Kontaktelemente 13 in der Anschlussdose 11 kann durch im Gehäuse 111 der Anschlussdose 11 ausgebildete Rastelemente erfolgen. Alternativ oder zusätzlich können heißverprägte Halteelemente des Gehäuses 111 eingesetzt werden. Dabei ist es denkbar, dass die Öffnung der Trennstellen 135 in einem Arbeitsschritt mit dem Heißverprägen erfolgt.

In Figur 3c ist die Anordnung aus der Figur 3a nochmals in einem Montagezustand wiedergegeben, in dem das Kontaktelement 13 auf die Anschlusskontakte 4 aufgedrückt ist, so dass die Kontakttulpen 133 die Anschlusskontakte 4 kontaktieren.

Bevorzugt sind, wie zuvor beschrieben, die Kontaktelemente 13 bereits in die Anschlussdose 11 integriert. Es ist alternativ auch möglich, die Kontaktelemente 13 wie in der Figur 3c sichtbar zunächst ohne Anschlussdose auf die Kontaktträger 15 aufzusetzen und dann die Anschlussdose 11 überzustülpen.

In jedem Fall ist durch die Verklebung der Anschlussdose 11 mit ihrer Unterseite 114 auf der Rückseite 3 des PV-Moduls 1 und das Verschließen des Kontaktbereichs 112 durch den Deckel 12 der im Gehäuse 111 der Anschlussdose 11 ausgebildete Hohlraum hermetisch so abgedichtet, dass beispielsweise ein Vergießen dieses Hohlraums nicht erforderlich ist. Vorteilhaft kann durch Öffnen eines Deckels 12 dann das Kontaktelement 13 ausgetauscht werden, beispielsweise wenn an der betreffenden Bypass-Diode 134 ein Defekt aufgetreten ist. Falls ein Austausch von Elementen nicht vorgesehen ist, kann der Deckel 12 auch integral mit der Anschlussdose 11 ausgebildet sein, die Anschlussdose 11 also mit Ausnahme der Öffnung an ihrer Unterseite 114 vollständig geschlossen sein.

### Bezugszeichen

- 1: Photovoltaik-Modul (PV-Modul)
- 2: Rahmen
- 3: Rückseite
- 4: Anschlusskontakt

- 10: Anschlussanordnung

- 11: Anschlussdose
- 111: Gehäuse
- 112: Kontaktbereich
- 113: Endabschnitt
- 114: Unterseite

- 12: Deckel

- 13: Kontaktelement
- 131: Stanzgitter
- 132: Anschluss
- 133: Kontakttulpe
- 134: Bypass-Diode

- 14: Anschlusskabel

- 15: Kontaktträger
- 151: Unterseite
- 152: Kontaktführungsnut

## Patentansprüche

1. Photovoltaikmodul (1) mit mindestens zwei Zellanordnungen, die extern an Anschlusskontakten (4) kontaktierbar sind, die in den Zellanordnungen zugeordneten Gruppen von jeweils zwei Anschlusskontakten (4) entlang einer Linie an der Rückseite des Photovoltaikmoduls (1) angeordnet sind, wobei genau eine Anschlussdose (11) auf einer Rückseite (3) des Photovoltaikmodul (1) angeordnet ist, die ein Gehäuse (111) aufweist, das zu der Rückseite (3) hin mindestens eine Öffnung zur Durchführung der Anschlusskontakt (4) aufweist, und wobei das Gehäuse (111) alle Anschlusskontakte (4) des Photovoltaikmoduls (1) überdeckt, **dadurch gekennzeichnet, dass**
das Photovoltaikmodul (1) eine rechteckige Grundfläche aufweist, wobei die Linie, entlang derer die Anschlusskontakte (4) angeordnet sind, parallel zu einer der Seitenkanten des Photovoltaikmodul (1) verläuft und wobei das Gehäuse (111) der Anschlussdose (11) eine Länge aufweist, die größer als 50 % der Länge der Seitenkante ist.

2. Photovoltaikmodul (1) nach Anspruch 1, bei dem die Länge des Gehäuses (111) der Anschlussdose (11) größer als 66 % und bevorzugt größer als 80 % der Länge der Seitenkante ist.

3. Photovoltaikmodul (1) nach Anspruch 2, aufweisend einen äußeren Rahmen (2) aus Metallprofilen, wobei das Gehäuse (111) der Anschlussdose (11) mit mindestens einem Endabschnitt (113) bis an den Rahmen (2) reicht.

4. Photovoltaikmodul (1) nach Anspruch 3, wobei das Gehäuse (111) der Anschlussdose (11) auf beiden Seiten mit Endabschnitten (113) bis an den Rahmen (2) reicht.

5. Photovoltaikmodul (1) nach einem der Ansprüche 1 bis 4, wobei das Gehäuse (111) eine Unterseite (114) aufweist, die als Klebefläche dient, mit der die Anschlussdose (11) auf die Rückseite (3) aufgeklebt ist.

6. Anschlussdose (11) für ein Photovoltaikmodul (1), gemäß einem der Ansprüche 1-5, das mindestens zwei Zellanordnungen aufweist, die extern an mindestens jeweils zwei Anschlusskontakten (4) kontaktierbar sind, wobei die Anschlussdose (11) ein Gehäuse (111) aufweist, das mindestens eine Öffnung zur Durchführung der Anschlusskontakte (4) aufweist, und wobei im Gehäuse (111) mindestens vier Kontakte zur Kontaktierung der Anschlusskontakte (4) angeordnet sind, wobei das Gehäuse (111) eine langgestreckte Grundform aufweist, wobei alle Anschlusskontakte (4) in einer Linie entlang einer Längsrichtung des Gehäuses (111) angeordnet sind und wobei die Kontakte im Gehäuse (111) in Kontaktbereichen (112) angeordnet sind, **dadurch gekennzeichnet, dass**
das Gehäuse (111) in den Kontaktbereichen (112) auch nach oben jeweils eine Öffnung aufweist, die mit einem Deckel (12) verschließbar ist.

7. Anschlussdose (11) nach Anspruch 6, aufweisend mindestens einen Kontaktträger (13), der mindestens zwei Kontakte trägt.

8. Anschlussdose (11) nach Anspruch 7, bei der der mindestens eine Kontaktträger (13) durch ein Stanzgitter (131) gebildet ist.

9. Anschlussdose (11) nach Anspruch 7 oder 8, bei der der mindestens ein Kontaktträger (13) alle Kontakte zur Kontaktierung der Anschlusskontakte (4) trägt.

10. Anschlussdose (11) nach einem der Ansprüche 6 bis 9, bei der die Kontakte Kontakttulpen (133) sind.

11. Anschlussdose (11) nach einem der Ansprüche 7 bis 10, bei der an dem mindestens einen Kontaktträger (13) mindestens eine Bypass-Diode (134) angeordnet ist, die parallel zu zwei Kontakten geschaltet ist.

## Claims

1. A photovoltaic module (1) with at least two cell arrangements, which are externally contactable at connecting contacts (4), which are arranged along a line at the rear side of the photovoltaic module (1) in groups of two connecting contacts (4) in each case which are allocated to the cell arrangements, wherein precisely one connection socket (11) is arranged on a rear side (3) of the photovoltaic module (1), this connection socket having a housing (111) which has, toward the rear side (3) at least one opening for passing the connecting contact (4) through, and wherein the housing (111) covers all connecting contacts (4) of the photovoltaic module (1) **characterized in that** the photovoltaic module (1) having a rectangular surface area, wherein the line along which the connecting contacts (4) are arranged runs parallel to one of the side edges of the photovoltaic module (1) and wherein the housing (111) of the connection socket (11) has a length which is greater than 50 % of the length of the side edge.

2. The photovoltaic module (1), in which the length of the housing (111) of the connection socket (11) is greater than 66% and preferably greater than 80% of the length of the side edge.

3. The photovoltaic module (1) according to Claim 2, having an outer frame (2) made of metal profiles, wherein the housing (111) of the connection socket (11) reaches up to the frame (2) by at least one end section (113).

4. The photovoltaic module (1) according to Claim 3, wherein the housing (111) of the connection socket (11) reaches up to the frame (2) on both sides by end sections (113).

5. The photovoltaic module (1) according to one of claims 1 to 4, wherein the housing (111) has an underside (114) which serves as a gluing surface by which the connection socket (11) is glued onto the rear side (3).

6. A connection socket (11) for a photovoltaic module (1) according to one of claims 1 to 5 which has at least two cell arrangements, which are externally contactable at at least two connecting contacts (4), wherein the connection socket (11) has a housing (111) which has at least one opening for passing the connecting contact (4) through and wherein at least four contacts for contacting the connecting contacts (4) are arranged in the housing (111), wherein the housing (111) has an elongated basic shape, wherein all connecting contacts (4) are arranged in a line along a longitudinal direction of the housing (111)and wherein the contacts are arranged in contact regions (112) in the housing (111) **characterized in that** the housing (111) also has, in each of the contact regions (112), an opening upwards which can be closed with a cover (12).

7. The connection socket (11) according to claim 6, which has at least one contact bearer (13) which bears at least two contacts.

8. The connection socket (11) according to Claim 7, in which the at least one contact bearer (13) is formed by a lead frame (131).

9. The connection socket (11) according to Claim 7 or 8, in which the at least one contact bearer (13) bears all contacts for contacting the connecting contacts (4).

10. The connection socket (11) according to one of claims 6 to 9, in which the contacts are tulip contacts (133).

11. The connection socket (11) according to one of claims 7 to 10, in which at least one bypass diode (134), which is connected in parallel to two contacts, is arranged at the at least one contact bearer (13).

## Revendications

1. Module photovoltaïque (1) avec au moins deux arrangements de cellules qui peuvent être mis en contact sur l'extérieur sur des contacts de raccordement (4) disposés en groupes de deux contacts de raccordement (4) chacun, associés aux arrangements de cellules le long d'une ligne sur la face arrière du module photovoltaïque (1), dans lequel est disposée sur une face arrière (3) du module photovoltaïque (1) exactement une prise de raccordement (11) qui comporte un boîtier (111) présentant au moins une ouverture tournée vers la face arrière (3) pour le passage du contact de raccordement (4), et dans lequel le boîtier (111) recouvre tous les contacts de raccordement (4) du module photovoltaïque (1), **caractérisé en ce que** le module photovoltaïque (1) présente une surface en plan rectangulaire, la ligne le long de laquelle les contacts de raccordement (4) sont disposés étant parallèle à l'un des bords latéraux du module photovoltaïque (1) et le boîtier (111) de la prise de raccordement (11) présentant une longueur supérieure à 50 % de la longueur du bord latéral.

2. Module photovoltaïque (1) selon la revendication 1, dans lequel la longueur du boîtier (111) de la prise de raccordement (11) est plus grande que 66 % et de préférence plus grande que 80 % de la longueur du bord latéral.

3. Module photovoltaïque (1) selon la revendication 2, comprenant un cadre extérieur (2) fait de profilés métalliques, dans lequel le boîtier (111) de la prise de raccordement (11) va jusqu'au cadre (2) avec au moins une section d'extrémité (113).

4. Module photovoltaïque (1) selon la revendication 3, dans lequel le boîtier (111) de la prise de raccordement (11) va jusqu'au cadre (2) des deux côtés avec des sections d'extrémité (113).

5. Module photovoltaïque (1) selon l'une des revendications 1 à 4, dans lequel le boîtier (111) comporte une face inférieure (114) servant de surface de collage, avec laquelle la prise de raccordement (11) est collée sur la face arrière (3).

6. Prise de raccordement (11) pour un module photovoltaïque (1) selon l'une des revendications 1 à 5 comportant au moins deux arrangements de cellules qui peuvent être mis en contact sur l'extérieur sur au moins deux contacts de raccordement (4) chacune, dans laquelle la prise de raccordement (11) comprend un boîtier (111) qui comporte au moins une ouverture pour le passage des contacts de raccordement (4), et dans laquelle sont disposés dans le boîtier (111) au moins quatre contacts pour la mise en contact des contacts de raccordement (4), dans laquelle le boîtier (111) présente une forme de base allongée, dans laquelle tous les contacts de raccordement (4) sont disposés sur une ligne dans le sens de la longueur du boîtier (111) et dans laquelle les contacts sont disposés dans le boîtier (111) dans des zones de contact (112), **caractérisée en ce que** le boîtier (111) présente aussi une ouverture vers le haut dans chacune des zones de contact (112), qui peut être fermée par un couvercle (12).

7. Prise de raccordement (11) selon la revendication 6, comportant au moins un porte-contacts (13) qui porte au moins deux contacts.

8. Prise de raccordement (11) selon la revendication 7, dans laquelle l'au moins un porte-contacts (13) est formé par une grille (131) découpée à l'emporte-pièce.

9. Prise de raccordement (11) selon la revendication 7 ou 8, dans laquelle l'au moins un porte-contacts (13) porte tous les contacts pour la mise en contact des contacts de raccordement (4).

10. Prise de raccordement (11) selon l'une des revendications 6 à 9, dans laquelle les contacts sont des contacts tulipes (133).

11. Prise de raccordement (11) selon l'une des revendications 7 à 10, dans laquelle au moins une diode de dérivation (134) monté en parallèle à deux contacts est disposée dans au moins un porte-contacts (13).
